# EUROPEAN PATENT APPLICATION

(11) **EP 4 604 230 A1**
(43) Date of publication of application: **20.08.2025**
(21) Application number: 24206436.8
(22) Date of filing: 14.10.2024
(51) Int. Cl.: H01M 10/04, H01M 50/103, H01M 50/169, H01M 50/547, H01M 50/548, H01M 50/566, H01M 50/15, H01M 50/176, H01M 50/543

(54) **SECONDARY BATTERY**

(30) Priority: 19.02.2024 KR 20240023745
(71) Applicant: SAMSUNG SDI CO., LTD., Yongin-si, Gyeonggi-do 17084 (KR)
(72) Inventor: Kim, Jihwan, 17084 Yongin-Si, Gyeonggi-do (KR); Yong, Jun-Sun, 17084 Yongin-Si, Gyeonggi-do (KR); Bae, Kwangsoo, 17084 Yongin-Si, Gyeonggi-do (KR); Lee, Junhyung, 17084 Yongin-Si, Gyeonggi-do (KR); Roh, Heyoungcheoul, 17084 Yongin-Si, Gyeonggi-do (KR); Bae, Chaeeun, 17084 Yongin-Si, Gyeonggi-do (KR); Lee, Jungwoo, 17084 Yongin-Si, Gyeonggi-do (KR)
(74) Representative: Gulde & Partner

(57) **Abstract**

A secondary battery includes an electrode assembly, a subplate connected to the electrode assembly. The secondary battery also includes current collector having a planar portion coupled to the subplate, a protruding portion protruding from the planar portion, and a projection provided on a top surface of the protruding portion. A terminal plate is coupled to the current collector and a hole is formed in the terminal plate, wherein the projection extends through the hole.

## Description

### BACKGROUND

### 1. Field

Aspects of embodiments of the present disclosure relate to a secondary battery and a method of manufacturing a secondary battery.

### 2. Description of the Related Art

A secondary battery refers to a rechargeable battery that may be charged and discharged a plurality of times. Such secondary batteries are mainly used in various applications such as electronics (e.g., smartphones, notebook computers, and tablets), electric vehicles, solar power generation, and emergency power supplies. In particular, lithium (Li)-ion batteries are used in various electronic products and electric vehicles because of their high energy density and high charge and discharge efficiency.

Secondary batteries may be categorized as cylindrical secondary batteries, prismatic secondary batteries, and pouch secondary batteries, depending on the shape of the case. A prismatic secondary battery has a structure in which an electrode assembly is embedded in a cylindrical metal can. The electrode assembly is inserted into the prismatic metal can, and the can is sealed by welding a cap plate. However, if there is a poor fit between a current collector and a terminal plate, the electrical characteristics of the secondary battery may be degraded.

The above information disclosed in this Background section is for enhancement of understanding of the background of the present disclosure, and therefore, it may include information that does not constitute related (or prior) art.

### SUMMARY

An aspect of the present disclosure is to provide a secondary battery configured to solve at least one of the above-described problems and a method of manufacturing a secondary battery.

These and other aspects and features of the present disclosure will be described in or will be apparent from the following description of embodiments of the present disclosure.

According to an aspect of the present disclosure, a secondary battery comprises an electrode assembly, a subplate (directly) connected to the electrode assembly, a current collector including a planar portion coupled to the subplate, a protruding portion protruding from the planar portion, and a projection provided on a top surface of the protruding portion, and a terminal plate coupled to the current collector, with a hole formed in the terminal plate, wherein the projection extends through the hole.

In some embodiments, a diameter of the hole is greater than a diameter of the projection.

In some embodiments, the protruding portion of the current collector is in contact with the terminal plate.

In some embodiments, the terminal plate comprises a welding area coupled to the protruding portion by welding, and the welding area is positioned around the projection. In other words, the terminal plate comprises a welding area, in which the terminal plate is coupled to the protruding portion by welding, and the welding area is positioned around the projection.

In some embodiments, the terminal plate comprises an upper terminal plate and a lower terminal plate, and the upper terminal plate and the lower terminal plate are formed of different materials.

In some embodiments, a height of the projection is greater than a thickness of the lower terminal plate.

In some embodiments, the projection comprises a first portion comprising an uppermost surface and a second portion provided between the first portion and the protruding portion (in X-axis direction), and a diameter of the first portion is smaller than a diameter of the second portion. Wherein the diameters are determined in Z-axis direction orthogonal to the X-axis direction.

In some embodiments, the projection comprises a first portion comprising an uppermost surface and a second portion provided between the first portion and the protruding portion (in X-axis direction), and a diameter of the first portion is greater than a diameter of the second portion. Wherein the diameters are determined in Z-axis direction orthogonal to the X-axis direction.

In some embodiments, the secondary battery further comprises a case in which the electrode assembly is accommodated, the case including an open first side and an open second side opposite the first side, a first cap plate covering the first side, and a second cap plate covering the second side, wherein a through-hole is formed in the first cap plate, and the protruding portion extends through the through-hole.

In some embodiments, the case comprises, a first long sidewall and a second long sidewall facing each other and spaced apart from each other, and a first short sidewall and a second short sidewall facing each other and spaced apart from each other, wherein areas of the first and second short sidewalls are less than areas of the first and second long sidewalls.

In some embodiments, the secondary battery further comprises a sealing member coupled to the first cap plate, wherein the terminal plate is coupled to a surface of the sealing member.

In some embodiments, the secondary battery further comprises a vent provided on the first short sidewall or the second short sidewall.

According to some embodiments of the present disclosure, a secondary battery comprises an electrode assembly, a case in which the electrode assembly is accommodated, the case including an open first side and an open second side opposite the first side, a first subplate assembly and a second subplate assembly electrically connected to opposite sides of the electrode assembly, a first cap assembly covering the first side and coupled to the first subplate assembly, and a second cap assembly covering the second side and coupled to the second subplate assembly, wherein the first cap assembly comprises a first cap plate and a first terminal plate coupled to the first cap plate, with a hole formed in the first terminal plate, the first subplate assembly comprises a subplate and a current collector coupled to the subplate, and the current collector comprises a planar portion coupled to the subplate, a protruding portion protruding from the planar portion, and a projection provided on an upper surface of the protruding portion, and the projection extends through the hole.

In some embodiments, the projection comprises a first portion comprising an uppermost surface and a second portion provided between the first portion and the protruding portion, and a diameter of the first portion is less than a diameter of the second portion.

In some embodiments, the second cap assembly comprises a second cap plate and a second terminal plate coupled to the second cap plate, the second terminal plate comprises an upper terminal plate and a lower terminal plate having a second hole, and the upper terminal plate and the lower terminal plate are formed of different materials.

Accordingly the present invention allows a gripper in a manufacturing process of the secondary battery to grip and pull the projection such that the welding process may be performed in a state where the terminal plate and the collector are in contact with each other. As a result, welding defects between the collector and the terminal plate may be reduced, and the reliability of a secondary cell may be improved.

According to some embodiments of the present disclosure, a method of manufacturing a secondary battery, the method comprises positioning a cap assembly over a current collector comprising a protruding portion and a projection provided on an upper surface of the protruding portion, gripping the projection and pulling the projection with a gripper, and welding the current collector and the cap assembly, wherein the cap assembly comprises a cap plate and a terminal plate coupled to the cap plate.

In some embodiments, a hole is formed in the terminal plate, the gripping of the projection and the pulling the projection with the gripper comprises, gripping the projection by the gripper, and pulling the projection to extend through the hole.

In some embodiments, the welding of the current collector and the cap assembly comprises first welding the current collector and the cap assembly and second welding the current collector and the cap assembly, wherein the first welding of the current collector and the cap assembly comprises, welding the protruding portion and the terminal plate around the projection in a state where the protruding portion and the terminal plate are in contact with each other, and detaching the gripper from the projection.

In some embodiments, the welding of the protruding portion and the terminal plate comprises performing welding on a first region of the terminal plate, the second welding of the current collector and the cap assembly performs welding on a second region of the terminal plate, and the first region is positioned within the second region.

In some embodiments, the method further comprises welding the cap plate and a case.

According to embodiments of the present disclosure, the gripper may grip and pull the projection such that the welding process may be performed in a state where the terminal plate and the collector are in contact with each other. As a result, welding defects between the collector and the terminal plate may be reduced, and the reliability of a secondary cell may be improved.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates a perspective diagram showing a secondary battery according to some embodiments of the present disclosure;
FIG. 2 illustrates a cross-sectional diagram showing the secondary battery according to some embodiments of the present disclosure;
FIG. 3 illustrates a perspective diagram showing a case according to some embodiments of the present disclosure;
FIG. 4 illustrates an enlarged diagram showing a region R1 in FIG. 2;
FIG. 5 illustrates a structure in which the first cap assembly and the first subplate assembly shown in FIG. 4 are separated from each other;
FIG. 6 illustrates an enlarged diagram showing a region R2 in FIG. 2;
FIG. 7 illustrates a structure in which the second cap assembly and the second subplate in FIG. 7 are separated from each other;
FIGS. 8 and 9 illustrate a secondary battery according to some embodiments of the present disclosure;
FIGS. 10 and 11 are diagrams illustrating a secondary battery according to some embodiments of the present disclosure;
FIG. 12 illustrates a perspective diagram showing a secondary battery according to some embodiments of the present disclosure;
FIG. 13 illustrates a cross-sectional diagram showing the secondary battery according to some embodiments of the present disclosure;
FIGS. 14 to 18 illustrate a method of manufacturing a secondary battery according to some embodiments of the present disclosure;
FIG. 19 is a flowchart 1300 illustrating a method of manufacturing a secondary battery according to some embodiments of the present disclosure.

### DETAILED DESCRIPTION OF THE EMBODIMENTS

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be positioned in contact with the upper (or lower) surface of the element, and another element may also be interposed between the element and the arbitrary element positioned on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

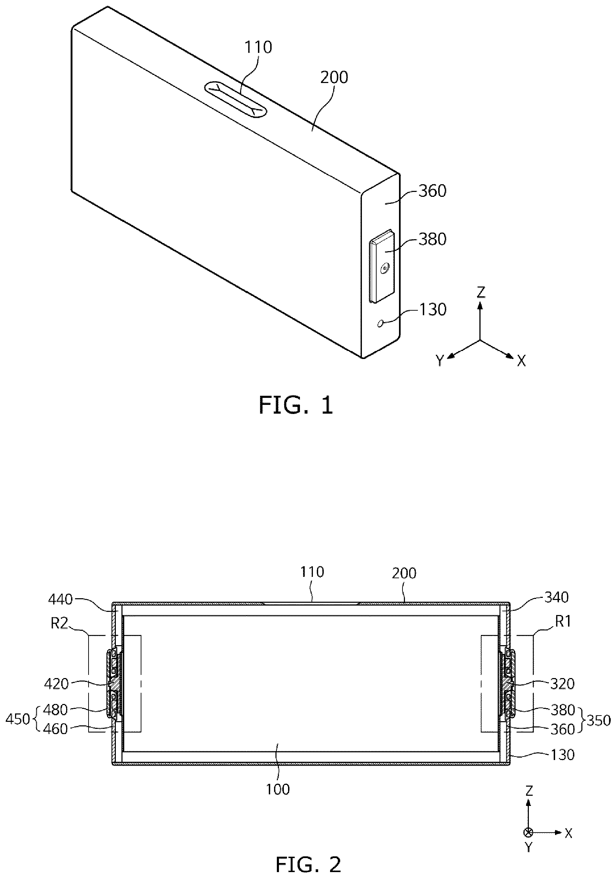

FIG. 1 illustrates a perspective diagram showing a secondary battery according to some embodiments of the present disclosure. FIG. 2 illustrates a cross-sectional diagram showing the secondary battery according to some embodiments of the present disclosure.

Referring to FIGS. 1 and 2, the secondary battery may include an electrode assembly 100, a case 200 including the electrode assembly 100, a first subplate 320, a second subplate 420, a first cap assembly 350, and a second cap assembly 450.

The electrode assembly 100 may be included in the case 200. The electrode assembly 100 may be provided by winding or stacking a laminate including a first electrode plate (not shown), a separator (not shown), and a second electrode plate (not shown) each formed of a thin plate or film. In a case where the electrode assembly 100 is a wound laminate, the axis of the winding thereof may be parallel to the longitudinal direction of the case 200. The electrode assembly 100 may be a stack type instead of being a wound type, but the shape of the electrode assembly 100 of the present disclosure is not limited thereto. In addition, the electrode assembly 100 may be a Z stack electrode assembly in which a positive electrode plate and a negative electrode plate are provided on opposite sides of the separator bent into a Z-shaped stack. One or more electrode assemblies 100 may be stacked and received in the case 200 such that the long sides thereof are adjacent to each other. The present disclosure is not intended to limit the number of electrode assemblies 100. In the electrode assembly 100, the first electrode plate may act as a positive electrode, and the second electrode plate may act as a negative electrode. The reverse is also possible.

The first electrode plate may be formed by applying a first electrode active material, such as graphite or carbon, to a first electrode collector plate formed of a metal foil such as, for example, copper (Cu), a Cu alloy, nickel (Ni), or a Ni alloy, and may include a first electrode tab (or a first uncoated portion), which is a portion to which the first electrode active material is not applied. The first electrode tab may be a path for current flow between the first electrode plate and a first subplate assembly 310. In some examples, the first electrode tab may be formed by cutting the first electrode plate so that the first electrode tab protrudes from a first side when the first electrode plate is fabricated, and the first electrode plate may protrude further from the first side than the separator without additional cutting.

The second electrode plate is formed by applying a second electrode active material, such as a transition metal oxide, to a second electrode collector plate formed of a metal foil such as, for example, aluminum (Al) or an Al alloy, and may include a second electrode tab (or a second uncoated portion), which is a portion to which the second electrode active material is not applied. The second electrode tab may be a path for current flow between the second electrode plate and the second subplate assembly 410. In some examples, the second electrode tab may be formed by cutting the second electrode plate so that the second electrode tab protrudes from a second side when the second electrode plate is fabricated, and the second electrode plate may protrude further from the second side than the separator without additional cutting.

In some examples, the first electrode tab may be positioned on the right end side of the electrode assembly, and the second electrode tab may be positioned on the left end side of the electrode assembly. The terms "left" and "right" are used herein for ease of description with reference to the secondary battery illustrated in FIG. 2, and the positions may change as the secondary battery is rotated left and right or up and down.

In some embodiments, an electrolyte inlet 130 may be provided on a first cap plate 360. Electrolyte may be injected into the case 200 through the electrolyte inlet 130. In FIG. 1, the electrolyte inlet 130 is illustrated as being provided on the first cap plate 360, but the present disclosure is not limited thereto. After the injection of electrolyte is complete, the electrolyte inlet 130 may be sealed using a sealing means such as a stopper.

In some embodiments, a vent 110 may be provided on a first side of the case 200. For example, the vent 110 may be provided on the lower surface of the case 200. Herein, the lower surface may refer to a surface facing downward in a case where the secondary battery is installed. The vent 110 may prevent the secondary battery from exploding or prevent a chain exothermic reaction of secondary batteries arranged in close proximity. For example, the vent 110 may be configured to open when the internal pressure of the secondary battery exceeds a predetermined critical pressure. The critical pressure may be set differently depending on the application, material, purpose, and the like of the secondary battery. In another example, the vent 110 may be configured to open when the internal temperature exceeds a predetermined critical temperature.

In FIG. 1, the vent 110 is illustrated as being a single vent provided at the center of a surface of the case 200, but the present disclosure is not limited in this regard. Any number of vents 110 may be provided at any positions in a surface of the case 200. For example, two or more vents 110 may be provided in the surface of the case 200.

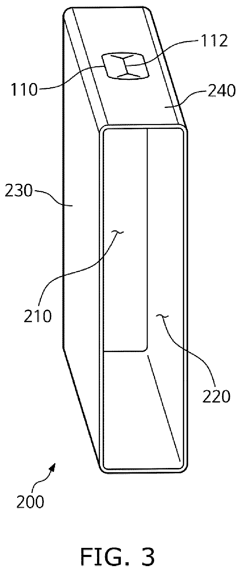

FIG. 3 illustrates a perspective diagram showing a case according to some embodiments of the present disclosure.

Referring to FIGS. 2 and 3, the case 200 may include long sidewalls 230 facing each other, short sidewalls 240 facing each other, an open first side 210, and an open second side 220.

A first direction X may refer to the X-axis direction. A second direction Y may be orthogonal to the first direction X. The second direction Y may refer to the Y-axis direction. A third direction Z may be respectively orthogonal to the first direction X and the second direction Y. The third direction Z may refer to the Z-axis direction.

The long sidewalls 230 may include a first long sidewall portion and a second long sidewall portion. The first long sidewall portion and the second long sidewall portion may face each other. That is, the first long sidewall portion and the second long sidewall portion may face each other while being spaced apart from each other in the second direction Y.

The short sidewalls 240 may include a first short sidewall portion and a second short sidewall portion. The first short sidewall portion and the second short sidewall portion may face each other. That is, the first short sidewall portion and the second short sidewall portion may face each other while being spaced apart from each other in the third direction Z. The area of each of the first short sidewall portion and the second short sidewall portion may be less than the area of each of the first long sidewall portion and the second long sidewall portion.

The open first side 210 and the open second side 220 may be provided on the opposite sides of the case 200. The open second side 220 may face the open first side 210. The open second side 220 and the open first side 210 may face each other while being spaced apart from each other in the first direction X. Each of the open first and second sides 210 and 220 may refer to an open area.

The case 200 may be formed of a conductive metal, such as Al, an Al alloy, or Ni-plated steel.

The first cap plate 360 may cover the open first side 210 and be coupled to the case 200. A second cap plate 460 may cover the open second side 220 and be coupled to the case 200. For example, each of the first cap plate 360 and the second cap plate 460 may be coupled to the case 200 by welding. The first cap plate 360 and the second cap plate 460 may seal the case 200.

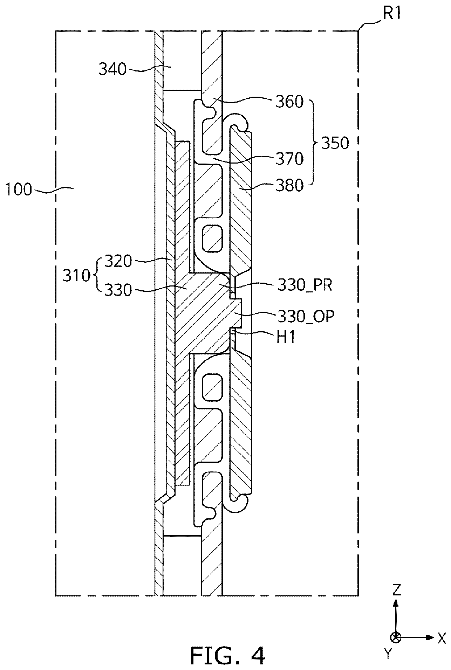

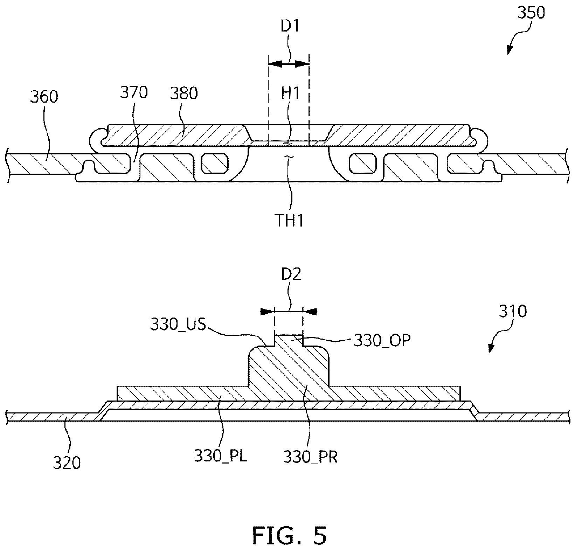

FIG. 4 illustrates an enlarged diagram showing a region R1 in FIG. 2. FIG. 5 illustrates a structure in which the first cap assembly and the first subplate assembly shown in FIG. 4 are separated from each other.

Referring to FIG. 4, the first subplate assembly 310 and the first cap assembly 350 may be coupled to a first side of the electrode assembly 100.

The first subplate assembly 310 may be coupled to the first side of the electrode assembly 100 and be electrically connected to the first electrode plate (e.g., the positive electrode plate) of the electrode assembly 100. The first subplate assembly 310 may include the first subplate 320 and the first current collector 330.

The first subplate 320 may be coupled to a first electrode tab of the electrode assembly 100. For example, the first electrode tab may be coupled to the first subplate 320 by welding. The first subplate 320 may be in contact with the first electrode tab and be electrically connected to the first electrode plate.

The first current collector 330 may be coupled to the first subplate 320. For example, the first current collector 330 and the first subplate 320 may be coupled to each other by welding. The first current collector 330 and the first subplate 320 may be electrically connected to each other.

A first insulation member 340 may be positioned between the first subplate assembly 310 and the first cap assembly 350. The first insulation member 340 may prevent the first subplate 320 and the first cap plate 360 from contacting each other.

Referring to FIG. 5, the first current collector 330 may include a first planar portion 330_PL, a first protruding portion 330_PR, and a first projection 330_OP. The first planar portion 330_PL may be coupled to the first subplate 320 by welding. The first protruding portion 330_PR may protrude from the first planar portion 330_PL. The first protruding portion 330_PR may have a cylindrical shape.

The first projection 330_OP may be provided on the upper surface 330_US of the first protruding portion 330_PR. The first projection 330_OP may protrude outwardly from the upper surface 330_US of the first protruding portion 330_PR. The first projection 330_OP is shown as being cylindrical, but the present disclosure is not limited to the depicted shape.

The first cap assembly 350 may include a first cap plate 360, a first sealing member 370, and a first terminal plate 380.

The first cap plate 360 may include a first through-hole TH1. The first sealing member 370 may be coupled to the first cap plate 360. The first sealing member 370 may provide a seal between the first terminal plate 380 and the first cap plate 360. The first sealing member 370 may include an insulating material. The first sealing member 370 may insulate the first cap plate 360 and the first terminal plate 380 from each other.

The first terminal plate 380 may be coupled to a surface of the first sealing member 370. The first terminal plate 380 may be a positive electrode terminal of a secondary battery. A busbar may be welded to the first terminal plate 380 and be electrically connected to another secondary battery.

The upper surface of the first terminal plate 380 may include a recess. The recess may be formed in a portion of the upper surface of the first terminal plate 380 that overlaps the first protruding portion 330_PR in the first direction X. Because of the recess, the thickness of the central portion of the first terminal plate 380 may be less than the thickness of the other portions to the first terminal plate 380.

The first terminal plate 380 may include a first hole H1. The first hole H1 may have a first diameter D1. The first projection 330_OP may have a second diameter D2. And the first diameter D1 may be greater than the second diameter D2.

Hereinafter, the coupling between the first subplate assembly 310 and the first cap assembly 350 will be described. In a case where the first subplate assembly 310 and the first cap assembly 350 are coupled to each other, the upper surface 330_US of the first protruding portion 330_PR may be in contact with the first terminal plate 380, with the first projection 330_OP extending through the first hole H1, and the upper surface of the first projection 330_OPbeing positioned in the recess of the first terminal plate 380.

The first protruding portion 330_PR and the first terminal plate 380 may be coupled to each other by welding. For example, a welding area may be formed on the upper surface of the first terminal plate 380, with the welding area being formed around the first projection 330_OP. A welding process may be performed on the welding area, thereby coupling the first terminal plate 380 and the first current collector 330 to each other. Accordingly, the first current collector 330 and the first terminal plate 380 may be electrically connected. Weld beads or the like may be formed on the welding area due to the welding process.

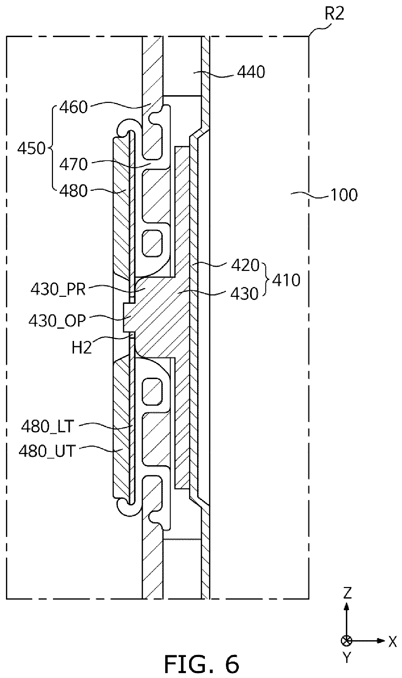

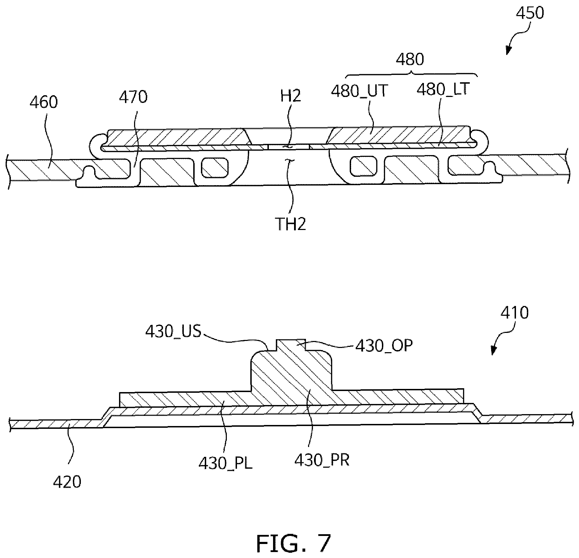

FIG. 6 illustrates an enlarged diagram showing a region R2 in FIG. 2. FIG. 7 illustrates a structure in which the second cap assembly and the second subplate in FIG. 7 are separated from each other.

Referring to FIG. 6, the second subplate assembly 410 and the second cap assembly 450 may be coupled to the second side of the electrode assembly 100.

The second subplate assembly 410 may be coupled to the second side of the electrode assembly 100 and electrically connected to a second electrode plate (e.g., a negative electrode plate) of the electrode assembly 100. The second subplate assembly 410 may include a second subplate 420 and a second current collector 430.

The second subplate 420 may be coupled to a second electrode tab of the electrode assembly 100. For example, the second electrode tab may be coupled to the second subplate 420 by welding. The second subplate 420 may be in contact with the second electrode tab, and the second subplate 420 may be electrically connected to the second electrode plate.

The second current collector 430 may be coupled to the second subplate 420. For example, the second current collector 430 and the second subplate 420 may be coupled to each other by welding. The second current collector 430 may be electrically connected to the second subplate 420.

A second insulation member 440 may be positioned between the second subplate assembly 410 and the second cap assembly 450. The second insulation member 440 may prevent the second subplate 420 and the second cap plate 460 from contacting each other.

Referring to FIG. 7, the second current collector 430 may include a second planar portion 430_PL, a second protruding portion 430_PR, and a second projection 430_OP. The second planar portion 430_PL may be coupled to the second subplate 420 by welding. The second protruding portion 430_PR may protrude from the second planar portion 430_PL. The second protruding portion 430_PR may have a cylindrical shape.

The second projection 430_OP may be formed on the upper surface 430_US of the second protruding portion 430_PR. The second projection 430_OP may protrude outwardly from the upper surface 430_US of the second protruding portion 430_PR. The second projection 430_OP is shown as being cylindrical, but the present disclosure is not limited to the depicted shape.

The second cap assembly 450 may include the second cap plate 460, a second sealing member 470, and a second terminal plate 480.

The second cap plate 460 may include a second through-hole TH2. The second sealing member 470 may be coupled to the second cap plate 460. The second sealing member 470 may provide a seal between the second terminal plate 480 and the second cap plate 460. The second sealing member 470 may include an insulating material. The second sealing member 470 may insulate the second cap plate 460 and the second terminal plate 480 from each other.

The second terminal plate 480 may be coupled to a surface of the second sealing member 470. The second terminal plate 480 may be a negative electrode terminal of the secondary battery. A busbar may be welded to the second terminal plate 480 and electrically connected to another secondary battery.

The second terminal plate 480 may include an upper terminal plate 480_UT and a lower terminal plate 480_LT. The lower terminal plate 480_LT may be in contact with the second sealing member 470. The upper terminal plate 480_UT may be positioned on top of the lower terminal plate 480_LT. The lower terminal plate 480_LT may be positioned between the sealing member 470 and the upper terminal plate 480_UT.

A portion of the lower terminal plate 480_LT may be exposed by the upper terminal plate 480_UT. For example, a portion of the lower terminal plate 480_LT may be exposed through a recess in the central portion of the upper terminal plate 480_UT. The recess of the upper terminal plate 480_UT may overlap the second protruding portion 430_PR in the first direction X. The recess of the upper terminal plate 480_UT may have the same shape as the recess of the first terminal plate 380 in FIG. 4. The recess of the upper terminal plate 480_UT may correspond to an opening in the terminal plate, and may be connected to a second hole H2 of the lower terminal plate 480_LT.

In some embodiments, the upper terminal plate 480_UT and the lower terminal plate 480_LT may be formed of different materials. The upper terminal plate 480_UT may include, for example, aluminum (Al). The lower terminal plate 480_LT may include, for example, copper (Cu). Specifically, the upper terminal plate 480_UT may be a conductive material including Al as a major component, and the lower terminal plate 480_LT may be a conductive material including Cu as a major component. As used herein, the term major component means a material that has the predominant content among the materials of the alloy, in the language of a person having ordinary knowledge in the art.

While the upper terminal plate (480_UT) has been described as including Al and the lower terminal plate (480_LT) has been described as including Cu, this disclosure is only illustrative. In some embodiments, the upper terminal plate 480_UT and the lower terminal plate 480_LT may include other conductive metals.

The lower terminal plate 480_LT may include a second hole H2. The second hole H2 may be formed in the part of the lower terminal plate 480_LT that is exposed by the upper terminal plate 480_UT. A portion of the upper surface of the second protruding portion 430_PR may be exposed by the second hole H2. The diameter of the second hole H2 may be greater than the diameter of the second projection 430_OP. The height of the second projection 430_OP may be greater than the thickness of the lower terminal plate 480_LT. As such, the second projection 430_OP may extend through the second hole H2 and be exposed to the outside of the lower terminal plate 480_LT.

Hereinafter, the coupling between the second subplate assembly 410 and the second cap assembly 450 will be described. In a case where the second subplate assembly 410 and the second cap assembly 450 are coupled to each other, the upper surface 430_US of the second protruding portion 430_PR may be in contact with the lower terminal plate 480_LT, with the second projection 430_OP extending through the second hole H2, and the upper surface of the second projection 430_OP being positioned in the recess of the second terminal plate 480.

The second protruding portion 430_PR and the second terminal plate 480 may be coupled to each other by welding. For example, a welding area may be formed on the upper surface of the lower terminal plate 480_LT. The welding area may be formed around the second projection 430_OP. By a welding process performed on the welding area, the second terminal plate 480 and the second current collector 430 may be coupled to each other. Accordingly, the second current collector 430 and the second terminal plate 480 may be electrically connected. Weld beads or the like may be formed on the welding area due to the welding process.

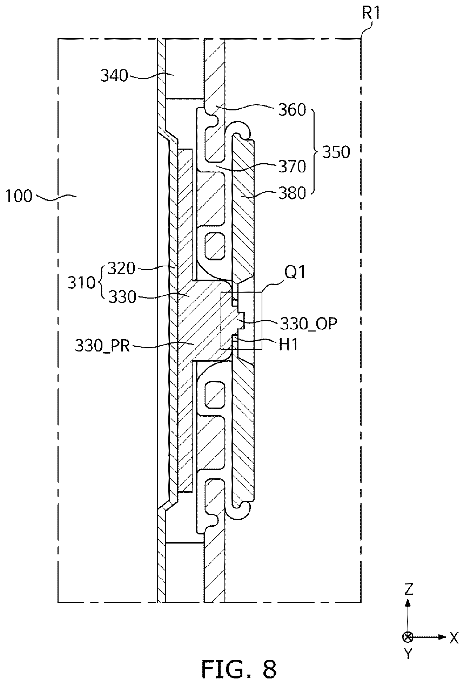

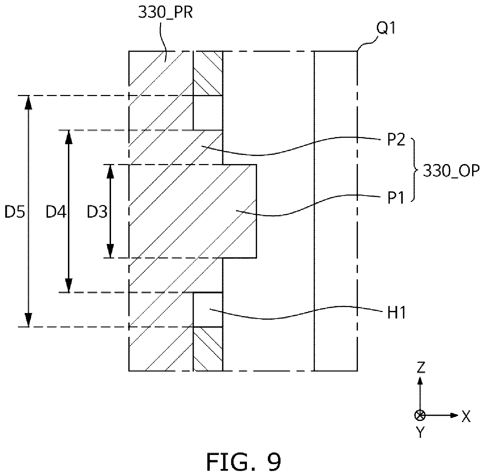

FIGS. 8 and 9 illustrate a secondary battery according to some embodiments of the present disclosure. For reference, FIG. 8 illustrates an enlarged diagram showing the region R1 in FIG. 2, and FIG. 9 illustrates an enlarged diagram showing a region Q1 in FIG. 8. For ease of description, the following description will focus on features other than those described above with reference to FIGS. 4 and 5.

Referring to FIGS. 8 and 9, the first projection 330_OP may include a first portion P1 and a second portion P2. The first portion P1 may include the uppermost surface of the first projection 330_OP. For example, the first portion P1 may correspond to the top layer of the first projection 330_OP. The second portion P2 may be positioned to form a stepped portion with the first portion P1. The second portion P2 may be positioned between the first portion P1 and the first protruding portion 330_PR. For example, the second portion P2 may correspond to an intermediate layer of the first projection 330_OP. The first portion P1 may be a portion protruding in the first direction X from the second portion P2. The uppermost surface of the first projection 330_OP may be positioned over the recess of the first terminal plate 380. Herein, the uppermost surface of the first projection 330_OP may be the upper surface of the first portion P1.

In some embodiments, the first portion P1 may have a third diameter D3,the second portion P4 may have a fourth diameter D4, and the third diameter D3 may be less than the fourth diameter D4. The first portion P1 and the second portion P2 may form a stepped portion. In other words, from a planar perspective (as shown in FIG. 9), the first projection 330_OP may include a stepped shape.

The first hole H1 may have a fifth diameter D5, and the fifth diameter D5 may be greater than the fourth diameter D4 and the third diameter D3.

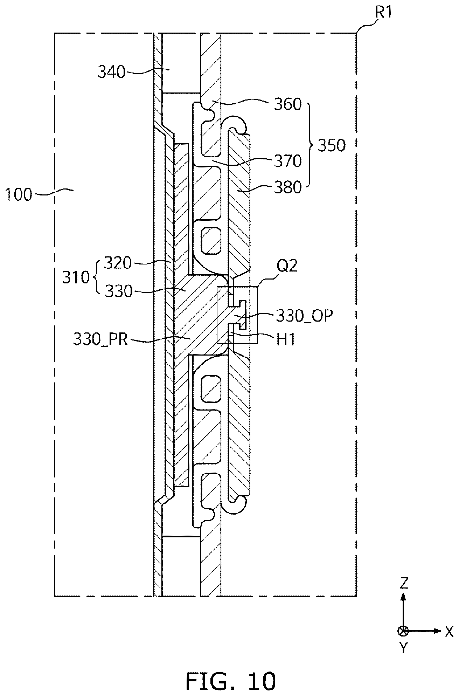

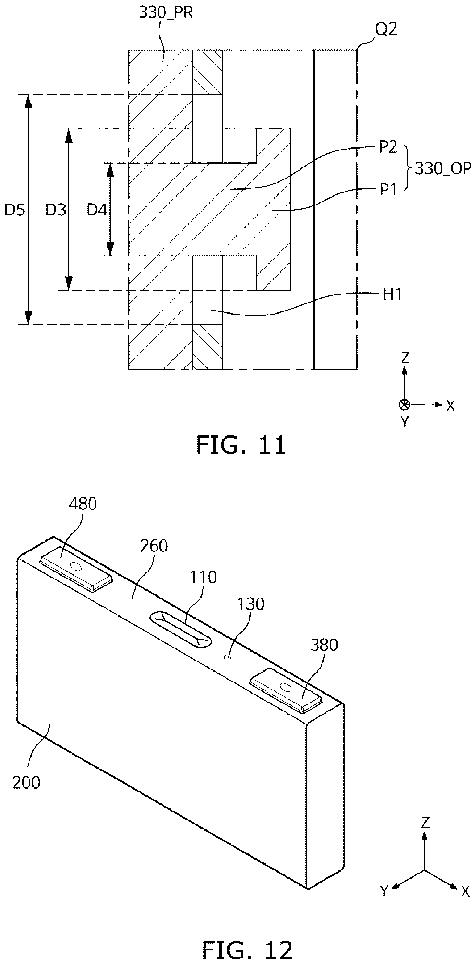

FIGS. 10 and 11 are diagrams illustrating a secondary battery according to some embodiments of the present disclosure. For reference, FIG. 10 illustrates an enlarged diagram showing the region R1 in FIG. 2, and FIG. 11 illustrates an enlarged diagram showing a region Q2 in FIG. 10. For ease of description, the following description will focus on features other than those described above with reference to FIGS. 4 and 5.

Referring to FIGS. 10 and 11, the first projection 330_OP may include a first portion P1 and a second portion P2. The first portion P1 may include the uppermost surface of the first projection (330_OP). The second portion P2 may extend from the first portion P1. The second portion P2 may be positioned between the first portion P1 and the first protruding portion 330_PR. The second portion P2 may extend through the first hole H1. The uppermost surface of the first projection 330_OP may be positioned over the recess of the first terminal plate 380. Herein, the uppermost surface of the first projection 330_OP may be the upper surface of the first part P1.

In some embodiments, the first portion P1 may have a third diameter D3, the second portion P4 may have a fourth diameter D4, and the third diameter D3 may be greater than the fourth diameter D4. The cross-section of the first projection 330_OP may have the shape of a capital letter T. In a case where the first projection 330_OP has such a shape, the first projection 330_OP may be strongly gripped by a gripper.

The first hole H1 may have a fifth diameter D5, and the fifth diameter D5 may be greater than the fourth diameter D4 and the third diameter D3.

In a secondary battery manufacturing method, the gripper may grip the projection and pull the projection to the top of the current collector so that the current collector contacts the terminal plate. For example, the gripper may pull the collector outwardly from inside the case. According to some embodiments of the present disclosure, the third diameter D3 of the first portion P1 is greater than the fourth diameter D4 of the second portion P2. As a result, a step may be formed between the first portion P1 and the second portion P2, and the gripper may easily grip the stepped portion.

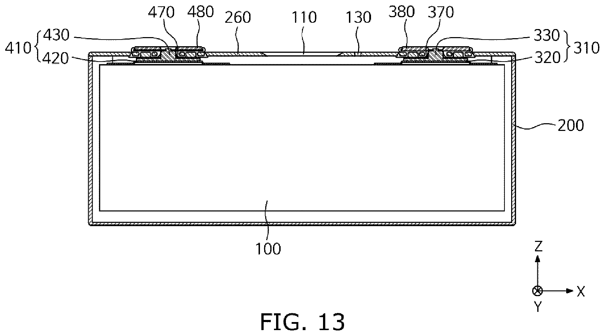

FIG. 12 illustrates a perspective diagram showing a secondary battery according to some embodiments of the present disclosure. FIG. 13 illustrates a cross-sectional diagram showing the secondary battery according to some embodiments of the present disclosure.

Referring to FIGS. 12 and 13, the secondary battery may include an electrode assembly 100, a case 200 including the electrode assembly, a third cap plate 260, a first subplate assembly 310, a second subplate assembly 410, a first terminal plate 380, and a second terminal plate 480.

The electrode assembly 100 may be included in the case 200. The electrode assembly 100 may include a first electrode plate, a separator, and a second electrode plate. The first electrode plate may include a first electrode tab. The second electrode plate may include a second electrode tab. In some embodiments, each of the first electrode tab and the second electrode tab may be positioned on an upper side of the electrode assembly. The term "upper side" is used herein for ease of description with reference to the secondary battery shown in FIG. 13, but the position thereof may change when the secondary battery is rotated left and right or up and down.

The electrolyte inlet 130 may be provided on the third cap plate 260. Electrolyte may be injected into the case 200 through the electrolyte inlet 130. After the injection of electrolyte is complete, the electrolyte inlet 130 may be sealed using a sealing means, such as a stopper or the like.

In some embodiments, the vent 110 may be provided on the third cap plate 260, but the present disclosure is not limited thereto. For example, the vent 110 may be provided on the lower surface of the case 200. Herein, the lower surface of the case 200 may be a side opposite the third cap plate 260 in the third direction Z. The vent 110 may prevent the secondary battery from exploding or prevent a chain exothermic reaction of secondary batteries arranged in close proximity.

The case 200 may include a third side that is open in the third direction Z. The third cap plate 260 may be coupled to the case to seal the open third side of the case 200 of the secondary battery.

The first subplate assembly 310 may be coupled to the surface of the first electrode tab of the electrode assembly 100. The first subplate assembly 310 may include the first subplate 320 and the first current collector 330. The first subplate 320 may be (directly) coupled to the first electrode tab by welding, and the first current collector 330 may be (directly) coupled to the first subplate 320 by welding. The first current collector 330 may include a first planar portion, a first protruding portion, and a first projection. Descriptions of the first subplate 320 and the first current collector 330 may be the same as those described above with reference to FIGS. 4 and 5.

The second subplate assembly 410 may be coupled to the surface of the second electrode tab of the electrode assembly 100. The second subplate assembly 410 may include the second subplate 420 and the second current collector 430. The second subplate 420 may be coupled to the second electrode tab by welding, and the second current collector 430 may be coupled to the second subplate 420 by welding. The second current collector 430 may include a second planar portion, a second protruding portion, and a second projection. Descriptions of the second subplate 420 and the second current collector 430 may be the same as those described above with reference to FIGS. 6 and 7.

The second third cap plate 260 may be coupled to the surfaces of the first subplate assembly 310 and the second subplate assembly 410. The first sealing member 370 may be coupled to the surface of the third cap plate 260, and the first terminal plate 380 may be coupled to the surface of the first sealing member 370. The first terminal plate 380 may include a first hole. The first terminal plate 380 may be electrically connected to the first current collector 330. Descriptions of the first sealing member 370 and the first terminal plate 380 may be the same as those described with reference to FIGS. 4 and 5.

The second sealing member 470 may be coupled to the surface of the third cap plate 260, and the second terminal plate 480 may be coupled to the surface of the second sealing member 470. The second terminal plate 480 may include a second hole. The second terminal plate 480 may be electrically connected to the second current collector 430. Descriptions of the second sealing member 470 and the second terminal plate 480 may be the same as those described above with reference to FIGS. 4 and 5.

In some embodiments, the first collector 330 described with reference to FIG. 8 or FIG. 10 may be applied to the secondary battery in FIG. 13.

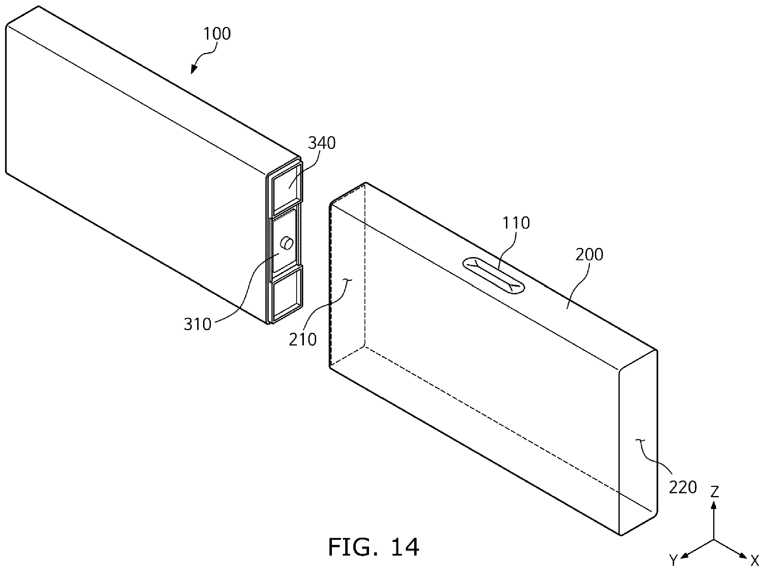

FIGS. 14 to 18 illustrate a method of manufacturing a secondary battery according to some embodiments of the present disclosure.

Referring to FIG. 14, the electrode assembly 100 may be inserted into the case 200. The first subplate assembly 310 and the first insulating member 340 may be coupled to a first side of the electrode assembly 100. Although not shown, the second subplate assembly and the second insulating member may be coupled to a second side of the electrode assembly 100.

The case 200 may include an open first side 210 and an open second side 220. The first side 210 and the second side 220 may be opposite each other in a first direction X. The vent 110 may be provided in the upper surface of the case 200.

The electrode assembly 100 with the first subplate assembly 310, the second subplate assembly, the first insulating member 340, and the second insulating member coupled together may be inserted into the case 200.

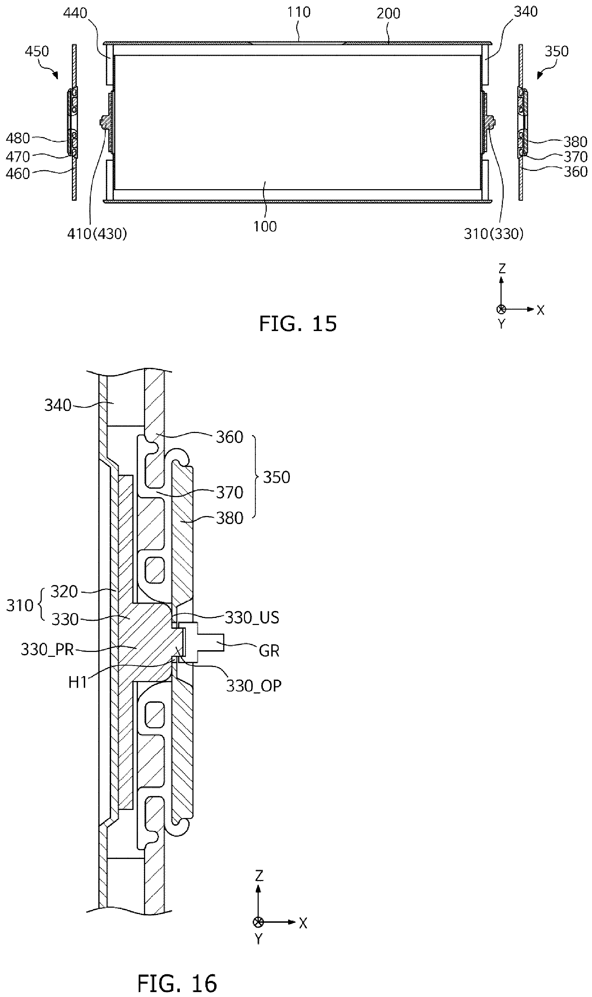

Referring to FIG. 15, the first cap assembly 350 may be positioned on the first subplate assembly 310, and the second cap assembly 450 may be positioned on the second subplate assembly 410.

Because the description of the coupling between the second cap assembly 450 and the second subplate assembly 410 may be substantially the same as the description of the coupling between the first cap assembly 350 and the first subplate assembly 310, only the first cap assembly 350 and the first subplate assembly 310 will be described below.

The first subplate assembly 310 may include the first collector body 330. The first cap assembly 350 may be positioned over the first protruding portion (e.g., 330_PR in FIG. 16) of the first collector 330. Herein, the top side of the first protruding portion 330_PR may refer to the first direction X. That is, the first cap assembly 350 may be positioned spaced apart from the first protruding portion 330_PR in the first direction X.

Referring to FIG. 16, the gripper GR may grip the first projection 330_OP and pull the first projection 330_OP upwardly (e.g., to the right in FIG. 16).

In some embodiments, the gripper GR may grip the first projection 330_OP, and the gripper GR may pull the first projection 330_OP in the first direction X such that the first projection 330_OP extends through the first hole H1. As the gripper GR pulls the first projection 330_OP, the first protruding portion 330_PR and the first terminal plate 380 may contact each other.

In some embodiments, the first projection 330_OP may extend through the first hole H1. The gripper GR may grip the first projection 330_OP protruding upwardly from the first hole H1. The gripper GR may pull the first projection 330_OP upwardly. As the gripper GR pulls the first projection 330_OP, the first protruding portion 330_PR and the first terminal plate 380 may contact each other.

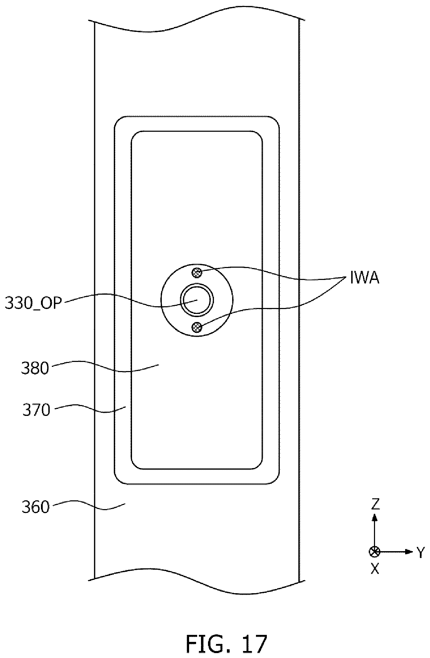

Referring now to FIGS. 16 and 17, the first collector body 330 and the first cap assembly 350 may be coupled to each other by welding.

In a state where the first protruding portion 330_PR and the first terminal plate 380 are brought into contact with each other by the gripper GR, a welding area may be formed around the first projection 330_OP. The welding area may be an intermittent localized area, a connected continuous area, or the like.

More specifically, in a state where the first protruding portion 330_PR and the first terminal plate 380 are brought into contact with each other by the gripper GR, a first welding process may be performed on a first welding area IWA of the first terminal plate 380. The first terminal plate 380 and the first current collector 330 may be coupled to each other by the first welding process. Weld beads or the like may be formed on the first welding area IWA. After the first welding process is performed, the gripper GR may be detached from the first projection 330_OP.

The first welding area IWA may be formed on a portion of the upper surface of the first terminal plate 380 that overlaps the first protruding portion 330_PR in the first direction X. The first welding area IWA may be formed around the first projection 330_OP. The first welding area IWA may be intermittently arranged. The first welding area IWA is shown as including two weld areas, but the present disclosure is not limited thereto. The first welding area IWA may include weld beads or the like.

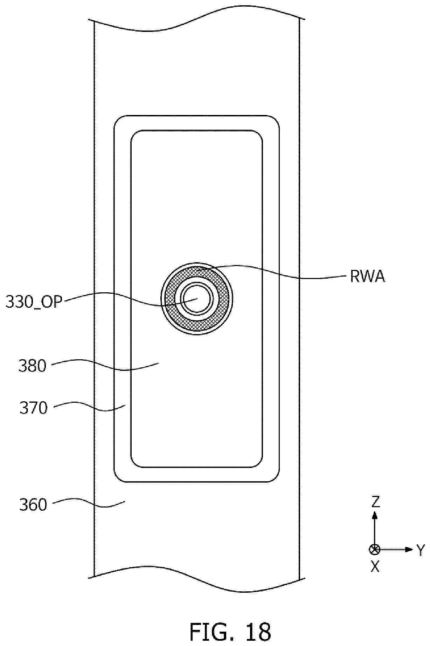

Referring to FIG. 18, a second welding process may be performed on a second welding area RWA of the first terminal plate 380. For example, the second welding region RWA may correspond to a connected continuous area (e.g., in the shape of a ring). By the second welding process, the first terminal plate 380 and the first collector 330 may be coupled to each other by welding. In some embodiments, the first welding area (e.g., IWA of FIG. 17) may be positioned within the second welding area RWA. Specifically, the second welding process may be performed on the first welding area IWA in superimposed manner.

A secondary battery as shown in FIG. 1 may be manufactured by welding the first cap plate 360 and the case 200. A secondary battery may be manufactured by inserting the electrode assembly into the case and welding the cap plates to opposite sides of the case. In such a secondary battery manufacturing process, there may be a defect such that the terminal plate and the collector are not tightly fitted to each other. In a case where the terminal plate and the collector are not welded to a tight fit, the electrical characteristics may be degraded. As a result, the quality and reliability of the secondary battery may be reduced.

But according to some embodiments of the present disclosure, in a state where the gripper GR grips the first projection 330_OP and pulls the first projection 330_OP upwardly so that the first current collector 330 and the first terminal plate 380 contact each other, the first welding process may be performed. That is, the first welding process may be performed such that there is a tight fitting force is obtained between the first current collector 330 and the first terminal plate 380. As a result, defective welding between the first current collector 330 and the first terminal plate 380 may be reduced. Further, the uniformity of the quality of the secondary battery may be improved, and the reliability of the secondary battery may be increased.

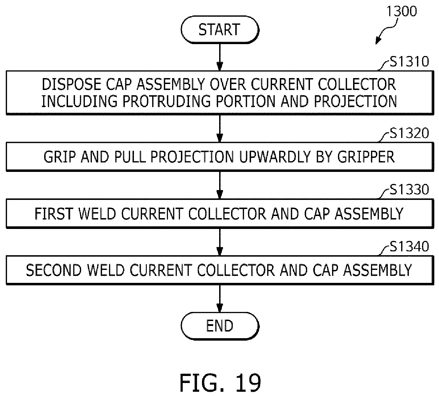

FIG. 19 is a flowchart 1300 illustrating a method of manufacturing a secondary battery according to some embodiments of the present disclosure.

Referring to FIG. 19, an electrode assembly having a subplate assembly coupled thereto may be provided. The subplate assembly may include a subplate and a current collector. The current collector may include a planar portion, a protruding portion, and a projection formed on an upper surface of the protruding portion. A cap assembly may be positioned over the collector in step S1310.

Thereafter, in step S1320, a gripper may grip the projection and pull the projection upwardly. The cap assembly may include a cap plate, a sealing member, and a terminal plate. A hole in the terminal plate may expose the projection of the current collector. The gripper may grip the exposed projection and pull the projection upwardly so that the projection extends through the hole in the terminal plate.

Subsequently, the collector body and cap assembly may be welded in step S1330. Specifically, the gripper may pull the projection upwardly, thereby bringing the protruding portion and the terminal plate into contact with each other. In a state where the protruding portion and the terminal plate are in contact, welding may be performed on a first region of the terminal plate. As a result, the protruding portion and the terminal plate may be welded together. Thus a first welding region may be formed around the projection. After the first welding is completed, the gripper may be detached from the projection.

Thereafter, the current collector and the cap assembly may be welded in step S1340. Specifically, a second welding may be performed on a second region of the terminal plate in a second welding region. As a result, the protruding portion and the terminal plate may be coupled to each other by welding. The first region may be positioned within the second welding region.

Subsequently, a secondary cell may be manufactured by welding the cap plate and the case.

Although the present disclosure has been described above with respect to embodiments thereof, the present disclosure is not limited thereto. Various modifications and variations can be made thereto by those skilled in the art within the scope of the present disclosure and the equivalent scope of the appended claims.

**<Description of Reference Symbols>**

| | | | |
|---|---|---|---|
| 100: | electrode assembly | 200: | case |
| 310: | first subplate assembly | 320: | first subplate |
| 330: | first current collector | 330_PL: | first planar portion |
| 330_PR: | first protruding portion | 330_OP: | first projection |
| 350: | first cap assembly | 360: | first cap plate |
| 370: | first sealing member | 380: | first terminal plate |
| 410: | second subplate assembly | 420: | second subplate |
| 430: | second current collector | 430_PL: | second planar portion |
| 430_PR: | second protruding portion | 430_OP: | second projection |
| 450: | second cap assembly | 460: | second cap plate |
| 470: | second sealing member | 480: | second terminal plate |

## Claims

1. A secondary battery comprising:
an electrode assembly (100);
a subplate (320, 420) connected to the electrode assembly (100);
a current collector (330, 430) including a planar portion (330_PL, 430_PL) coupled to the subplate (320, 420), a protruding portion (330_PR, 430_PR) protruding from the planar portion (330_PL, 430_PL), and a projection (330_OP, 430_OP) provided on a top surface of the protruding portion (330_PR, 430_PR); and
a terminal plate (380, 480) coupled to the current collector (330, 430), with a hole formed in the terminal plate (380, 480),
wherein the projection (330_OP, 430_OP) extends through the hole.

2. The secondary battery according to claim 1, wherein a diameter of the hole is greater than a diameter of the projection (330_OP, 430_OP).

3. The secondary battery according to claim 1 or 2, wherein the protruding portion (330_PR, 430_PR) of the current collector (330, 430) is in contact with the terminal plate (380, 480).

4. The secondary battery according to one of the preceding claims, wherein the terminal plate (380) comprises a welding area (IWA) coupled to the protruding portion (330_PR) by welding, and
wherein the welding area (IWA) is positioned around the projection (330_OP).

5. The secondary battery according to one of the preceding claims, wherein the terminal plate (480) comprises an upper terminal plate (480_UT) and a lower terminal plate (480_LT), and
wherein the upper terminal plate (480_UT) and the lower terminal plate (480_LT) are formed of different materials.

6. The secondary battery as recited in claim 5, wherein a height of the projection (330_OP) is greater than a thickness of the lower terminal plate (380_LT).

7. The secondary battery according to one of the preceding claims, wherein the projection (330_OP) comprises a first portion (P1) comprising an uppermost surface and a second portion (P2) provided between the first portion (P1) and the protruding portion (330_PR), and
wherein a diameter (D3) of the first portion (P1) is less than a diameter (D4) of the second portion (P2).

8. The secondary battery according to one of claims 1 to 6, wherein the projection (330_OP) comprises a first portion (P1) comprising an uppermost surface and a second portion (P2) provided between the first portion (P1) and the protruding portion (330_PR), and
wherein a diameter (D3) of the first portion (P1) is greater than a diameter (D4) of the second portion (P2).

9. The secondary battery according to one of the preceding claims, further comprising:
a case (200) in which the electrode assembly (100) accommodated, the case (200) including an open first side (210) and an open second side (220) opposite the first side (210);
a first cap plate (350) covering the first open side (210); and
a second cap plate (450) covering the second open side (220),
wherein a through-hole is formed in the first cap plate (350), and
wherein the protruding portion (330_PR) extends through the through-hole.

10. The secondary battery as recited in claim 9, wherein the case (200) comprises:
a first long sidewall (230) and a second long sidewall facing each other and spaced apart from each other; and
a first short sidewall (240) and a second short sidewall facing each other and spaced apart from each other,
wherein areas of the first and second short sidewalls are less than areas of the first and second long sidewalls.

11. The secondary battery according to one of claims 9 or 10, further comprising a sealing member (370, 470) coupled to the cap plate (350, 450),
wherein the terminal plate (380) is coupled to a surface of the sealing member (370).

12. The secondary battery according to one of claims 10 or 11, further comprising a vent (110) provided in the first short sidewall (240) or the second short sidewall.

13. The secondary battery according to one of claims 9 to 12, further comprising:
a first subplate assembly (310) and a second subplate (410) assembly electrically connected to opposite sides of the electrode assembly (100);
a first cap assembly (350) covering the first open side (210) and coupled to the first subplate assembly (310); and
a second cap assembly (450) covering the second open side (220) and coupled to the second subplate assembly (410),
wherein the first cap assembly (350) comprises the first cap plate (360) and the first terminal plate (380) coupled to the first cap plate (360), with a hole formed in the first terminal plate (380),
wherein the first subplate assembly (310) comprises the subplate (320) and the current collector (330) coupled to the subplate (320).

14. The secondary battery as recited in claim 13, wherein the projection (330_OP) comprises a first portion (P1) comprising an uppermost surface and a second portion (P2) provided between the first portion (P1) and the protruding portion (330_PR), and
wherein a diameter of the first portion (P1) is less than a diameter of the second portion (P2).

15. The secondary battery as recited in claim 13, wherein the second cap assembly (450) comprises a second cap plate (460) and a second terminal plate (480) coupled to the second cap plate (460),
wherein the second terminal plate (480) comprises an upper terminal plate (480_UT) and a lower terminal (480_LT) plate having a second hole, and
wherein the upper terminal plate (480_UT) and the lower terminal plate (480_LT) are formed of different materials.
